# EUROPEAN PATENT APPLICATION

(11) **EP 2 792 847 A2**
(43) Date of publication of application: **22.10.2014**
(21) Application number: 14461512.7
(22) Date of filing: 04.03.2014
(51) Int. Cl.: F01D 1/36, F02C 6/18

(54) **Heat and power plant with a waste gasification system**

(30) Priority: 18.04.2013 PL 40357913
(71) Applicant: Brzeski, Arkadiusz, 91-158 Lodz (PL)
(72) Inventor: Brzeski, Arkadiusz, 91-158 Lodz (PL)
(74) Representative: Ucinska, Julita

(57) **Abstract**

Heat and power plant with a waste gasification system comprising a gas engine (1) located inside a water tank (2), mounted onto a shaft (3) passing through the walls of the tank (2) to the outside, whereas a generator (4) is installed on an end of the shaft to generate electrical energy. The engine (1) is equipped with at least one supply conduit (5) for feeding fuel to the combustion chamber (14) and at least one outlet conduit (7) for evacuating exhaust gases. The outlet conduit (7) passes through a waste gasification chamber (8) having a gas outlet, connected to the supply conduit of the engine and/or an external tank (16). The water tank (2) has heating water circuit connections (10), (11), as well as a steam outlet through a valve (12). There are blades (15) mounted on the shaft, in the vicinity of the engine, that ensure uniform cooling of the engine (1). The heat and power plant enables electrical and heat energy to be generated from the combustion of fuel supplied both from an external source, as well as from the gasification of waste in the internal system of the power plant.

## Description

### TECHNICAL FIELD

The present invention relates to a heat and power plant with a waste gasification system, used for cogeneration of electrical and heat energy. The subject of the invention can be used mainly as an industrial, district or domestic combined heat and power plant.

### BACKGROUND ART

The Polish patent application P.357232, titled "Modular, combined heat and power station", describes a known combined heat and power station. The solution relates to a combined heat and power station comprising a set of modules in amount depending on the output capacity of the power station, whereas each module comprises a gas engine, a gas turbine, a boiler, and the remaining process equipment.

The objective of this invention is to design a heat and power plant with a waste gasification system, that enables electrical and heat energy to be generated from the combustion of fuel supplied both from an external source, as well as from the gasification of waste in the internal system of the power plant.

### DISCLOSURE OF THE INVENTION

The essence of this invention is a heat and power plant with a waste gasification system comprising a gas engine (Tesla engine) located inside a water tank, mounted onto a shaft passing through the walls of the tank to the outside, whereas a generator is installed on an end of the shaft to generate electrical energy. The gas engine comprises a Tesla turbine and a combustion chamber equipped with a valvular conduit. At least one supply conduit is run to the engine for feeding gaseous or liquid fuel to the combustion chamber. At least one outlet conduit is run from the engine for evacuating exhaust gases. The outlet conduit passes through a waste gasification chamber, and more particularly polyethylene, rubber, and wood waste. The waste gasification chamber has an outlet for gases, produced during the gasification of waste under the high temperature of exhaust gases in the outlet conduit, connected to the supply conduit of the engine and/or an external tank. The water tank has at least one water inlet and at least one water outlet. In the upper part of the tank, there is a steam outlet equipped with a valve. Steam is preferably directed to an additional turbine generator set. The quantity and pressure of steam depends on the level of water in the tank. There are blades mounted on the shaft, in the vicinity of the engine, that ensure uniform cooling of the engine at lower levels of water.

The solution according to this invention can be used, in particular, as an industrial, district or domestic heat and power plant, allowing for obtaining heat and electrical energy at a lower cost, while simultaneously reducing the amount of useless waste constituting a burden for the environment.

### BRIEF DESCRIPTION OF DRAWING

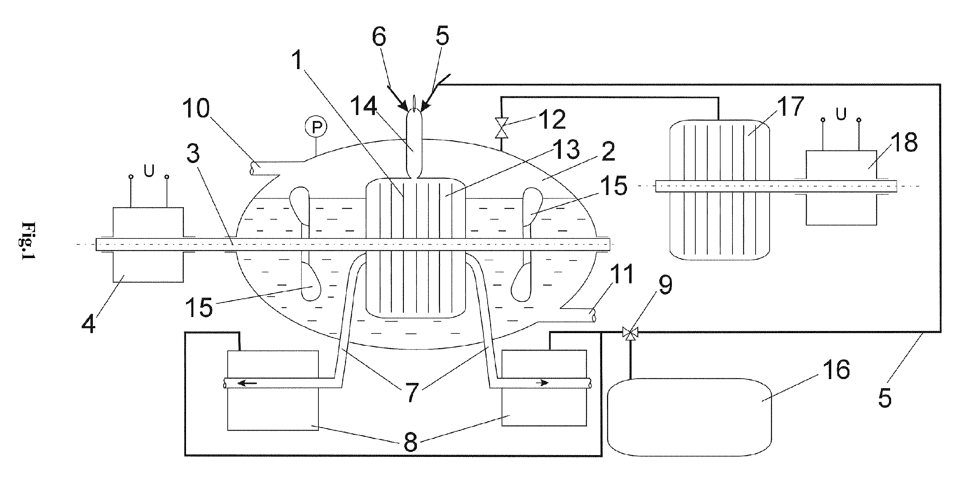

The subject of the invention is shown in an example embodiment of the invention on Fig. 1, which is a schematic cross-section of heat and power plant with a waste gasification system.

### BEST MODE FOR CARRYING OUT THE INVENTION

Heat and power plant with a waste gasification system comprises a gas engine 1 located inside a water tank 2, whereas the engine 1 is mounted on the shaft 3 passing through the walls of the tank 2 to the outside, whereas a generator 4 is installed on an end of the shaft 3 to generate electrical energy. The gas engine 1 comprises a Tesla turbine 13 and a combustion chamber 14. To the engine 1 are run: a supply conduit 5 for feeding gaseous or liquid fuel, and a conduit 6 for supplying air to the combustion chamber. Two outlet conduits 7 are run from the engine 1 for evacuating exhaust gases. Each of the outlet conduits 7 is run through a waste gasification chamber 8. Through a three-way valve 9, the waste gasification chamber 8 is connected to the supply conduit 5 feeding engine 1, or to a gas tank 16. The water tank 2 has heating water circuit connections 10 and 11. In the upper part of the tank 2, there is a steam outlet equipped with a valve 12. Steam is supplied to an additional turbine 17 coupled with a generator 18. There are profiled blades 15 inside the tank 2, on the shaft 3, on both sides of the engine.

Functioning of the heat and power plant is based on feeding gaseous or liquid fuel to the combustion chamber 14 of the gas engine 1. Fuel combustion causes a rotational movement of the Tesla turbine 13, mounted on the shaft 3, and through this shaft the generator 4, installed on an end thereof, is driven. Heat produced during the process of combustion of gas in the combustion chamber 14 is received by the water filling the tank 2. There are profiled blades 15 mounted in the shaft 3 on both sides of the engine, lifting a stream of water from the tank upwards, and thus providing cooling of the combustion chamber 14 even at a lower level of water in the tank. At a low level of water, the temperature of the engine 1 rises, causing water to evaporate at a greater rate and the pressure of steam to rise in the tank 2. Heat energy acquired from cooling of the engine 1 with the water in the tank 2 is used as domestic hot water, or in the form of steam, received through the valve 12, as a power source for the next Tesla turbine coupled with the electrical energy generator. Exhaust gases are evacuated through outlet conduits 7 and directed to the waste gasification chamber 8. This chamber holds waste, preferably polyethylene, rubber, or wood waste, that is to be gasified. Gasification occurs under the high temperature of exhaust gases without air access. The resulting gas is fed through the three-way valve 9, over the conduit 5 to the combustion chamber 14 of the engine 1 or to the gas tank 16.

The design of the heat and power plant allows for carrying out the process with flexibility, whereas during periods of reduced demand for domestic hot water, the production of steam can be increased to be used for generating electrical energy in the additional generator.

## Claims

1. Heat and power plant with a waste gasification system, that contains Tesla turbine and a combustion chamber, having a supply conduit for feeding gaseous or liquid fuel and an outlet conduit for evacuating exhaust gases, **characterised in that** the gas engine (1) is located inside a water tank (2) and is mounted on a shaft (3), passing through the walls of the tank (2) to the outside, whereas a generator (4) is installed on an end of the shaft to generate electrical energy, while at least one supply conduit (5) is run to the engine (1) for feeding fuel to a combustion chamber (14), and at least one outlet conduit (7) is run from the engine for evacuating exhaust gases, whereas the outlet conduit passes through at least one waste gasification chamber (8).

2. Heat and power plant according to claim 1, **characterised in that** the waste gasification chamber (8) has an outlet for gases connected to the supply conduit (5) of the engine and/or to an external gas tank (16).

3. Heat and power plant according to claim 1 or 2, **characterised in that** water tank (2) has at least one water inlet and at least one water outlet, and a steam outlet is located in the upper part of the tank (2).

4. Heat and power plant according to claim 3, **characterised in that** the steam outlet is connected through a valve (12) to an additional turbine (17) coupled with a generator (18).

5. Heat and power plant according to claim 1 or 3, **characterised in that** blades (15) are mounted on the shaft (3), in the vicinity of the turbine (13).
